# EUROPEAN PATENT APPLICATION

(11) **EP 1 324 519 A1**
(43) Date of publication of application: **02.07.2003**
(21) Application number: 01961360.3
(22) Date of filing: 04.09.2001
(51) Int. Cl.: H04J 3/00, H04N 7/24

(54) **STREAM DECODER**

(30) Priority: 11.09.2000 JP 2000274590; 14.02.2001 JP 2001036630
(71) Applicant: MATSUSHITA ELECTRIC INDUSTRIAL CO., LTD., Kadoma-shi, Osaka 571-8501 (JP)
(72) Inventor: OKAMOTO, Satoshi, Osaka-shi, Osaka 532-0022 (JP); TSUJI, Toshiaki, Kobe-shi, Hyogo 658-0066 (JP); MORISHITA, Hiroyuki, Hirakata-shi, Osaka 573-0013 (JP); HIRAI, Makoto, Suita-shi, Osaka 565-0836 (JP); KIYOHARA, Tokuzou, Osaka-shi, Osaka 545-0053 (JP)
(74) Representative: Calderbank, Thomas Roger
(86) International application number: JP0107660
(87) International publication number: WO02023776

(57) **Abstract**

An identifier adding circuit adds an identifier specifying the channel of each PES packet output from a TS decoder to a header of each PES packet; an identifier selecting circuit reads PID information corresponding to the identifier added to each PES packet from an identifier table, and then stores PES packets for respective channels into respective storage regions CH1 to CHn in a bank memory instructed for the read PID information by a controller; and a decoding circuit decodes the stored PES packets for the respective channels.

## Description

### Technical Field

The present invention relates to a stream decoding apparatus that decodes transport streams having multiplexed video data and/or audio data of a plurality of channels.

### Background Art

The digitization of broadcasting has been developed in recent years. In BS (Broadcast Satellite) digital broadcasting, for example, video signals and/or audio signals of a plurality of channels are compressively encoded by an MPEG (Moving Picture Experts Group) 2, and also multiplexed bit streams are transmitted.

In a conventional digital broadcasting receiver that receives bit streams thus transmitted through broadcasting satellites, first, data of a selected transmission channel undergoes a predetermined demodulation processing, so that transport streams including video data and/or audio data of a plurality of channels are produced. The transport streams are decoded by a transport decoder in the digital broadcasting receiver, so that PES (Packetized Elementary Stream) packets are produced. The PES packets are decoded by an AV (audio video) decoder, so that a digital video signal and/or digital audio signal is produced. Finally, such a video signal and/or audio signal as to be converted in a system suitable for a display device such as a television or the like is output to the display device.

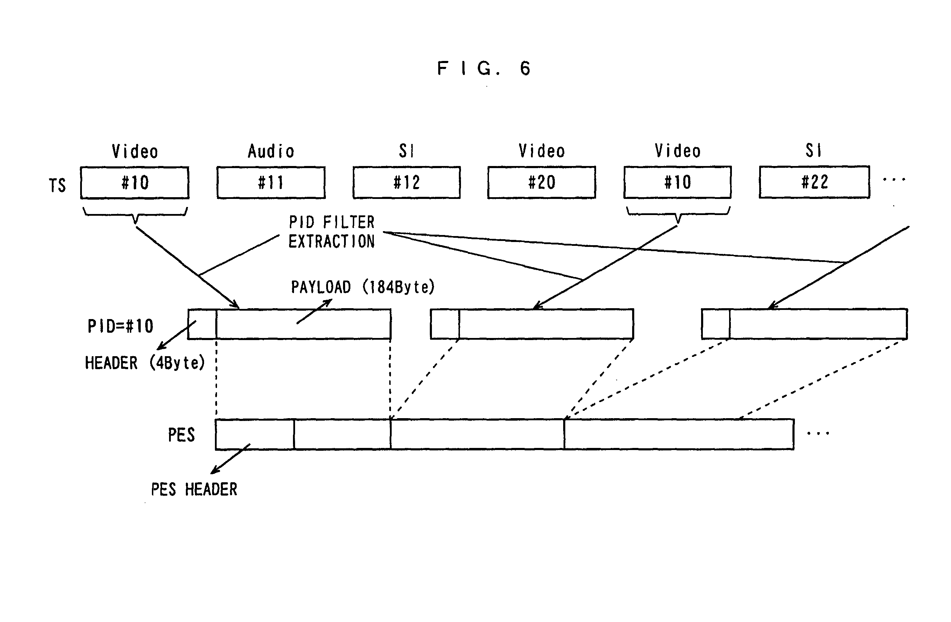

Fig. 6 is a schematic diagram for use in explaining a data structure of a transport stream and PES packets.

With reference to Fig. 6, video data (Video) and audio data (Audio) of a plurality of channels and service information (SI) are multiplexed in a transport stream (TS). Each packet in the transport stream is constituted by a 4-byte header including PID (Packet Identification) information, and a 184-byte payload. This PID information is 13-bit stream identification information indicating individual stream attributes of a corresponding packet and varies for each channel. Therefore, it is possible to specify the channel of each transport stream packet for the PID information.

By utilizing the above-described data structure of the transport stream, the PID information included in the header of each transport stream packet is filtered by a PID filter of the transport decoder, and the transport stream packets of an identical channel are extracted. In the example shown in Fig. 6, the transport stream packets of PID information #10, for example, are extracted by the PID filter.

Then, the extracted transport stream packets of the identical channel have their headers, including the PID information, cut off by the transport decoder, and their payloads connected to one another, so that a PES packet of the identical channel is produced. This PES packet is formed of a leading header and a remaining payload. The header includes information and the like for identifying whether this PES packet is video data or audio data.

In the conventional digital broadcasting receiver, since the transport streams and PES packets are structured as described above, a PES packet is produced by selection of one channel on the basis of PID information by the transport decoder, and the produced PES packet of one channel is then decoded by the AV decoder, so as to output a video signal and/or audio signal of one channel.

As described above, since video data and audio data of a plurality of channels are multiplexed in the transport streams, PID information is added to each transport stream packet, whereas no PID information is added to the decoded PES packet. That is, each PES packet only includes information as to whether this PES packet is video data or audio data, but fails to include information as to which channel's data this PES packet is.

Thus, when decoding the PES packets of a plurality of channels at one time, it is impossible to identify which channels' data the PES packets being decoded are. Therefore, it is impossible to recognize which channels' PES packets the PES packets being decoded are, and hence, it is impossible to decode the PES packets of a plurality of channels at one time in the conventional digital broadcasting receiver.

### Disclosure of Invention

An object of the present invention is to provide a stream decoding apparatus capable of decoding PES packets or elementary streams of a plurality of channels at one time while recognizing which channels' PES packets or elementary streams the PES packets or elementary streams being decoded are.

A stream decoding apparatus according to one aspect of the present invention includes: first decoding means that decodes a transport stream in which video data and/or audio data of a plurality of channels are multiplexed, to produce a PES packet or an elementary stream for each channel, and adds inherent identification information in each channel to the produced PES packet or elementary stream, to output the resultant PES packet or elementary stream; and second decoding means that decodes for each channel the PES packet or elementary stream output from the first decoding means by using the identification information added to the PES packet or elementary stream.

In the stream decoding apparatus in accordance with the present invention, by the first decoding means, the transport stream, in which the video data and/or audio data of the plurality of channels are multiplexed, is decoded to produce the PES packet or elementary stream for each channel, and then inherent identification information in each channel is added to the produced PES packet or elementary stream. Then, by the second decoding means, the PES packet or elementary stream is decoded · for each channel by using the identification information added to the PES packet or elementary stream, and hence, it is possible to specify, on the basis of the identification information, which channel's PES packet or elementary stream the PES packet or elementary stream being decoded is. Therefore, it is possible to decode the PES packets or elementary streams of the plurality of channels at one time while recognizing which channel's PES packet or elementary stream the PES packet or elementary stream being decoded is.

The first decoding means may include extracting means that extracts a transport stream packet of an identical channel from a transport stream by reference to PID information of the transport stream, transport stream decoding means that decodes the transport stream packet extracted by the extracting means, to produce a PES packet or an elementary stream for each channel, and adding means that adds inherent identification information in each channel to the PES packet or elementary stream output from the transport decoding means, and then outputs the resultant PES packet or elementary stream.

In this case, the transport stream packet of the identical channel is extracted from the transport stream by reference to the PID information of the transport stream, the extracted transport stream packet is decoded to produce the PES packet or elementary stream for each channel, and then the inherent identification information in each channel is added to the PES packet or elementary stream. Therefore, it is possible to determine which channel the PES packet or elementary stream belongs to, on the basis of the identification information added to the PES packet or elementary stream.

The second decoding means may include storing means having a plurality of storage regions provided for respective channels, storage region specifying means that stores the PES packet or elementary stream output from the adding means into a storage region of the storing means provided for a channel specified on the basis of the identification information added to the PES packet or elementary stream, and video/audio decoding means that decodes for each storage region the PES packet or elementary stream stored in the storing means.

In this case, the PES packet or elementary stream is stored in a storage region provided for each channel specified on the basis of the identification information added to the PES packet or elementary stream, so that PES packets or elementary streams are stored in the storage regions that are different for respective channels. Therefore, it is made possible to decode a PES packet or an elementary stream for each channel by decoding the PES packet or elementary stream for each storage region. At this time, by specifying which storage region the PES packet or elementary stream being decoded is read from, it is made possible to specify which channel's PES packet or elementary stream the concerned PES packet or elementary stream is. This makes it possible to decode the PES packets or elementary streams of a plurality of channels at one time while recognizing which channel's PES packet or elementary stream the PES packet or elementary stream being decoded is.

A stream decoding apparatus according to another aspect of the present invention includes: a plurality of transmission paths provided for respective channels; first decoding means that decodes a transport stream in which video data and/or audio data of a plurality of channels are multiplexed, and then outputs a PES packet or an elementary stream of each channel to a transmission path of the plurality of transmission paths provided for the channel of the PES packet or elementary stream; and second decoding means that decodes PES packets or elementary streams transmitted through the plurality of transmission paths.

In the stream decoding apparatus in accordance with the present invention, the transport stream, in which the video data and/or audio data of the plurality of channels are multiplexed is decoded, the decoded PES packet or elementary stream is transmitted through the transmission path provided for the channel of the PES packet or elementary stream, and the transmitted PES packet or elementary stream is decoded.

Thus, since the PES packet or elementary stream is transmitted through the transmission path provided for the channel of the PES packet or elementary stream, it is made possible, by specifying through which transmission path the PES packet or elementary stream has been transmitted, to specify which channel's PES packet or elementary stream the transmitted PES packet or elementary stream is. Therefore, it becomes possible to decode PES packets or elementary streams of the plurality of channels at one time while recognizing which channel's PES packet or elementary stream the PES packet or elementary stream being decoded is.

The first decoding means may include extracting means that extracts a transport stream packet of an identical channel from a transport stream by reference to PID information of the transport stream, transport stream decoding means that decodes the transport stream packet extracted by the extracting means, to produce a PES packet or an elementary stream for each channel, and selecting means that selects one of the transmission paths provided for the channel of the PES packet or elementary stream produced by the transport stream decoding means, and then outputs the PES packet or elementary stream to the selected transmission path.

In this case, the transport stream packet of the identical channel extracted by reference to the PID information of the transport stream is decoded to produce the PES packet or elementary stream for each channel, and the transmission path provided for the channel of the produced PES packet or elementary stream is selected from the plurality of transmission paths, so that the PES packet or elementary stream is output to the selected transmission path. Therefore, it becomes possible to transmit the produced PES packet or elementary stream through the transmission path provided for the channel of the PES packet or elementary stream.

The second decoding means may include storing means having a plurality of storage regions provided respectively for the plurality of transmission paths and storing PES packets or elementary streams transmitted through the plurality of transmission paths into the respective storage regions for the respective channels, and video/audio decoding means that decodes for the respective storage regions the PES packets or elementary streams stored in the storing means.

In this case, the storage regions are provided one for each of the plurality of transmission paths, and the PES packets or elementary streams transmitted through the respective transmission paths are stored in the respective storage regions that are different for the respective channels. Therefore, it is made possible to decode a PES packet or an elementary stream for each channel by decoding the PES packet or elementary stream for each storage region. At this time, by specifying which storage region the PES packet or elementary stream being decoded is read from, it is made possible to specify which channel's PES packet or elementary stream the PES packet or elementary stream being decoded is. This makes it possible to decode the PES packets or elementary streams of the plurality of channels at one time while recognizing which channel's PES packet or elementary stream the PES packet or elementary stream being decoded is.

A stream decoding apparatus according to still another aspect of the present invention includes: storing means having a plurality of storage regions one provided for each channel; storage region specifying means that stores a transport stream, a PES packet or an elementary stream of an identical channel which are produced from a transport stream in which video data and/or audio data of a plurality of channels are multiplexed, into a storage region in the storing means provided for the channel; and video/audio decoding means that decodes for each storage region the transport stream, PES packet or elementary stream stored in the storing means.

In the stream decoding apparatus in accordance with the present invention, a transport stream, a PES packet or an elementary stream produced from the transport stream, in which the video data and/or audio data of the plurality of channels are multiplexed, is stored in a storage region of the storing means for each channel. Thus, by decoding the transport stream for each storage region, it is made possible to decode the transport stream for each channel to produce a PES packet or an elementary stream and then decode the produced PES packet or elementary stream for each channel. Alternatively, by decoding the PES packet or elementary stream for each storage region, it is made possible to decode the PES packet or elementary stream for each channel. At this time, by specifying which storage region the PES packet or elementary stream being decoded is read from, it is made possible to specify which channel's PES packet or elementary stream the PES packet or elementary stream being decoded is. This makes it possible to decode the PES packets or elementary streams of the plurality of channels at one time while recognizing which channel's PES packet or elementary stream the PES packet or elementary stream being decoded is.

The stream decoding apparatus may further include extracting means that extracts a transport stream packet of an identical channel by reference to PID information of a transport stream in which video data and/or audio data of a plurality of channels are multiplexed, and then outputs the transport stream of the identical channel. The storage region specifying means may store the transport stream output from the extracting means into a storage region of the storing means , which is provided for a channel specified on the basis of PID information of the transport stream. The video/audio decoding means may decode the transport stream stored in the storing means for each storage region.

In this case, a transport stream packet of an identical channel is extracted from the transport stream by reference to the PID information of the transport stream, and the extracted transport stream is then stored in the storage region provided for the channel specified on the basis of the PID information of the transport stream. Accordingly, by decoding the transport stream for each storage region, it is made possible to decode the transport stream for each channel to produce a PES packet or an elementary stream, and decode the produced PES packet or elementary stream for each channel. At this time, by specifying which storage region the PES packet or elementary stream being decoded, that is, the transport stream packet before decoded is read from, it is made possible to specify which channel's PES packet or elementary stream the PES packet or elementary stream being decoded is. This makes it possible to decode PES packets or elementary streams of a plurality of channels at one time while recognizing which channel's PES packet or elementary stream the PES packet or elementary stream being decoded is.

The stream decoding apparatus may further include extracting means that extracts a transport stream packet of an identical channel by reference to PID information of a transport stream in which video data and/or audio data of a plurality of channels are multiplexed, and then outputs the transport stream of the identical channel. The storage region specifying means stores, into a storage region of the storing means provided for a channel specified on the basis of PID information of the transport stream output from the extracting means, a PES packet or an elementary stream made by decoding the output transport stream. The video/audio decoding means may decode for each storage region the PES packet or elementary stream stored in the storing means.

In this case, the transport stream packet of the identical channel is extracted from the transport stream by reference to the PID information of the transport stream, and the PES packet or elementary stream made by decoding the extracted transport stream is then stored in the storage region provided for the channel specified on the basis of the PID information of the transport stream. Thus, it is made possible to decode the PES packet or elementary stream for each channel by decoding the same for each storage region. At this time, by specifying which storage region the PES packet or elementary stream being decoded is read from, it is made possible to specify which channel's PES packet or elementary stream the PES packet or elementary stream being decoded is. This makes it possible to decode PES packets or elementary streams of a plurality of channels at one time while recognizing which channel's PES packet or elementary stream the PES packet or elementary stream being decoded is.

The storage region specifying means may include random accessible stream holding means that holds a transport stream, address control means that controls an address of the stream holding means in order to write into the stream holding means the transport stream output from the extracting means and read the transport stream held in the stream holding means, and PID identifying means that decodes the transport stream read out from the stream holding means to produce a PES packet or an elementary stream, and then stores the produced PES packet or elementary stream into a storage region of the storing means provided for a channel specified on the basis of PID information of the transport stream.

In this case, with the address of the stream holding means controlled by the address control means, the transport stream output from the extracting means is written into the stream holding means, and the transport stream held in the stream holding means is read out. By the PID identifying means, the transport stream read out from the stream holding means is decoded to produce a PES packet and an elementary stream, so that the produced PES packet or elementary stream is stored into the storage region of the storing means provided for the channel specified on the basis of the PID information of the transport stream.

Thus, since the stream holding means is random accessible, it is possible to integrate the contents of a plurality of transport stream packets into a continuous stream by using the stream holding means. Therefore, a higher processing speed can be achieved when a plurality of transport stream packets are processed by software, while a smaller circuit scale of hardware can be achieved when a plurality of transport stream packets are processed by hardware. Alternatively, when a plurality of transport stream packets are processed by software and hardware, it is possible to achieve a higher processing speed of software and also a smaller circuit scale of hardware.

The stream holding means may include a first region that holds the transport stream output from the extracting means, and a second region that holds the PES packet or elementary stream produced by the PID identifying means, wherein the PID identifying means may transfer the PES packet or elementary stream held in the second region of the stream holding means to a storage region of the storing means provided for the channel specified on the basis of the PID information of the transport stream.

In this case, the PES packet or elementary packet produced by the PID identifying means is temporarily held in the second region of the stream holding means, and is then transferred to the storage region of the storing means provided for the channel specified on the basis of the PID information of the transport stream. This makes it possible to transfer continuous data of the PES packets or elementary stream packets produced by the PID identifying means to the storage regions of the storing means. This results in an improved efficiency in the use of the storing means.

Moreover, since the first region that holds the transport stream output from the extracting means and the second region that holds the PES packet or elementary stream produced by the PID identifying means are both included in one stream holding means, the smaller circuit scale is achieved.

A stream decoding apparatus according to a further aspect of the present invention includes: a first decoding circuit that decodes a transport stream in which video data and/or audio data of a plurality of channels are multiplexed, to produce a PES packet or an elementary stream for each channel, and then adds inherent identification information in each channel to the produced PES packet or elementary stream and outputs the resultant PES packet or elementary stream; and a second decoding circuit that decodes for each channel the PES packet or elementary stream output from the first decoding circuit by using the identification information added to the PES packet or elementary stream.

In the stream decoding apparatus in accordance with the present invention, by the first decoding circuit, the transport stream, in which the video data and/or audio data of a plurality of channels are multiplexed is decoded to produce the PES packet or elementary stream for each channel, and then the inherent identification information in each channel is added to the produced PES packet or elementary stream. Then, by the second decoding circuit, the PES packet or elementary stream is decoded for each channel by using the identification information added to the PES packet or elementary stream, and hence, it becomes possible to specify which channel's PES packet or elementary stream the PES packet or elementary stream being decoded on the basis of the identification information is. It is thus possible to decode PES packets or elementary streams of a plurality of channels at one time while recognizing which channel's PES packet or elementary stream the PES packet or elementary stream being decoded is.

The first decoding circuit may include an extracting circuit that extracts a transport stream packet of an identical channel from a transport stream by reference to PID information of the transport stream, a transport stream decoding circuit that decodes the transport stream packet extracted by the extracting means to produce a PES packet or an elementary stream for each channel, and an adding circuit that adds inherent identification information in each channel to the PES packet or elementary stream output from the transport stream decoding circuit, and then outputs the resultant PES packet or elementary stream.

In this case, the transport stream packet of the identical channel is extracted from the transport stream by reference to the PID information of the transport stream, and is then decoded to produce the PES packet or elementary stream for each channel,- and then the inherent identification information in each channel is added to the produced PES packet or elementary stream. Thus, it is possible to determine which channel's PES packet or elementary stream the resultant PES packet or elementary stream is, on the basis of the identification information added to the PES packet or elementary stream.

The second decoding circuit may include a storing circuit having a plurality of storage regions one provided for each channel, a storage region specifying circuit that stores the PES packet or elementary stream output from the adding circuit into a storage region of the storing circuit provided for a channel specified on the basis of identification information added to the PES packet or elementary stream, and a video/audio decoding circuit that decodes for each storage region the PES packet or elementary stream stored in the storing circuit.

In this case, the PES packet or elementary stream is stored in the storage region provided for the channel specified on the basis of the identification information added to the PES packet or elementary stream, so that PES packets or elementary streams are stored in the storage regions that are different for respective channels. Therefore, it is made possible to decode the PES packets or elementary streams for respective channels by decoding the PES packets or elementary streams for respective storage regions. At this time, by specifying which storage region the PES packet or elementary stream being decoded is read from, it is made possible to specify which channel's PES packet or elementary stream the PES packet or elementary stream being decoded is. This makes it possible to decode PES packets or elementary streams of a plurality of channels at one time while recognizing which channel's PES packet or elementary stream the PES packet or elementary stream being decoded is.

A stream decoding apparatus according to a further aspect of the present invention includes: a plurality of transmission paths one provided for each channel; a first decoding circuit that decodes a transport stream in which video data and/or audio data of a plurality of channels are multiplexed, and then outputs a PES packet or an elementary stream for each channel to a transmission path of the plurality of transmission paths, which is provided for the channel of the PES packet or elementary stream; and a second decoding circuit that decodes the PES packets or elementary streams transmitted through the plurality of transmission paths.

In the stream decoding apparatus in accordance with the present invention, the transport stream, in which the video data and/or audio data of the plurality of channels are multiplexed, is decoded, then the decoded PES packet or elementary stream is transmitted through the transmission path provided for the channel of the PES packet or elementary stream, and the transmitted PES packet or elementary stream is decoded.

Thus, since the PES packet or elementary stream is transmitted through the transmission path provided for the channel of the PES packet or elementary stream, it is made possible to specify which channel's PES packet or elementary stream the transmitted PES packet or elementary stream is, by specifying through which transmission path the PES packet or elementary stream is transmitted. Therefore, it becomes possible to decode the PES packets or elementary streams of the plurality of channels at one time while recognizing which channel's PES packet or elementary stream the PES packet or elementary stream being decoded is.

The first decoding circuit may include an extracting circuit that extracts a transport stream packet of an identical channel from a transport stream by reference to PID information of the transport stream, a transport stream decoding circuit that decodes the transport stream packet extracted by the extracting circuit to produce a PES packet or an elementary stream for each channel, and a selecting circuit that selects a transmission path of the plurality of transmission paths, which is provided for the channel of the PES packet or elementary stream produced by the transport stream decoding circuit, and then outputs the PES packet or elementary stream to the selected transmission path.

In this case, the transport stream packet of the identical channel that has been extracted by reference to the PID information of the transport stream is decoded to produce a PES packet or an elementary stream for each channel, a transmission path provided for the channel of the produced PES packet or elementary stream is selected from the plurality of transmission paths, and the PES packet or elementary stream is output to the selected transmission path. Thus, the produced PES packet or elementary stream can be transmitted through the transmission path provided for the channel of the PES packet or elementary stream.

The second decoding circuit may include a storing circuit having a plurality of storage regions one provided for each of the plurality of transmission paths and storing in each storage region for each channel a PES packet or an elementary stream transmitted through each of the plurality of transmission paths, and a video/audio decoding circuit that decodes for each storage region the PES packet or elementary stream stored in the storing circuit.

In this case, a storage region is provided for each of the plurality of transmission paths, so that PES packets or elementary streams transmitted through the respective transmission paths are stored in the respective storage regions which are different for the respective channels. Thus, it is made possible to decode the PES packet or elementary stream for each channel by decoding the PES packet or elementary stream for each storage region. At this time, by specifying which storage -region the PES packet or elementary stream being decoded is read from, it is made possible to specify which channel's PES packet or elementary stream the PES packet or elementary stream being decoded is. This makes it possible to decode the PES packets or elementary streams of the plurality of channels at one time while recognizing which channel's PES packet or elementary stream the PES packet or elementary stream being decoded is.

A stream decoding apparatus according to a further aspect of the present invention includes: a storing circuit having a plurality of storage regions one provided for each channel; a storage region specifying circuit that stores a transport stream, a PES packet or an elementary stream of an identical channel produced from a transport stream in which video data and/or audio data of a plurality of channels are multiplexed, into a storage region of the storing circuit provided for the channel; and a video/audio decoding circuit that decodes for each storage region the transport stream, PES packet or elementary stream stored in the storing circuit.

In the stream decoding apparatus in accordance with the present invention, a transport stream, a PES packet or an elementary stream produced from the transport stream, in which video data and/or audio data of a plurality of channels are multiplexed, is stored for each channel in a storage region of the storing circuit. Thus, the transport stream is decoded for each-channel by being decoded for each storage region, so as to produce a PES packet or an elementary stream, and the produced PES packet or elementary stream is then decoded for each channel. Alternatively, the PES packet or elementary stream is decoded for each storage region, so as to be able to decode the PES packet or elementary stream for each channel. At this time, by specifying which storage region the PES packet or elementary stream being decoded is read from, it is made possible to specify which channel's PES packet or elementary stream the PES packet or elementary stream being decoded is. This makes it possible to decode PES packets or elementary streams of a plurality of channels at one time while recognizing which channel's PES packet or elementary stream the PES packet or elementary stream being decoded is.

The stream decoding apparatus may further include an extracting circuit that extracts a transport stream packet of an identical channel by reference to PID information of a transport stream in which video data and/or audio data of a plurality of channels are multiplexed, and then outputs a transport stream of the identical channel. The storage region specifying circuit may store the transport stream output from the extracting circuit into a storage region of the storing circuit provided for the channel specified on the basis of the PID information of the transport stream. The video/audio decoding circuit may decode for each storage region the transport stream stored in the storing circuit.

In this case, the transport stream packet of the identical channel is extracted from the transport stream by reference to the PID information of the transport stream, and the extracted transport stream is then stored in the storage region provided for the channel specified on the basis of the PID information of the transport stream. Thus, by decoding the transport stream for each storage region, it is made possible to decode the transport stream for each channel, so as to produce a PES packet or an elementary stream and hence decode the produced PES packet or elementary stream for each channel. At this time, by specifying which storage region the PES packet or elementary stream being decoded, i.e., the transport stream packet before decoded is read from, it is made possible to specify which channel's PES packet or elementary stream the PES packet or elementary stream being decoded is. This makes it possible to decode PES packets or elementary streams of a plurality of channels at one time while recognizing which channel's PES packet or elementary stream the PES packet or elementary stream being decoded is.

The stream decoding apparatus may further include an extracting circuit that extracts a transport stream packet of an identical channel by reference to PID information of a transport stream in which video data and/or audio data of a plurality of channels are multiplexed, and then outputs a transport stream of the identical channel. The storage region specifying circuit may store a PES packet or an elementary stream made by decoding the transport stream output from the extracting circuit, into a storage region of the storing circuit provided for the channel specified on the basis of the PID information of the transport stream. The video/audio decoding circuit may decode for each storage region the PES packet or elementary stream stored in the storing circuit.

In this case, the transport stream packet of the identical channel is extracted from the transport stream by reference to the PID information of the transport stream, and then the PES packet or elementary stream made by decoding the extracted transport stream is stored in the storage region provided for the channel specified on the basis of the PID information of the transport stream. Thus, it is made possible to decode the PES packet or elementary stream for each channel by decoding them for each storage region. At this time, by specifying which storage region the PES packet or elementary stream being decoded is read from, it is made possible to specify which channel's PES packet or elementary stream the PES packet or elementary stream being decoded is. This makes it possible to decode PES packets or elementary streams of a plurality of channels at one time while recognizing which channel's PES packet or elementary stream the PES packet or elementary stream being decoded is.

The storage region specifying circuit may include a random accessible stream holding circuit for holding a transport stream, an address control circuit that controls an address of the stream holding circuit in order to write the transport stream output from the extracting circuit into the stream holding circuit and read out the transport stream held in the stream holding circuit, and a PID identifying circuit that decodes the transport stream read from the stream holding circuit to produce a PES packet or an elementary stream, and then stores the produced PES packet or elementary stream into a storage region of the storing circuit provided for the channel specified on the basis of PID information of the transport stream.

In this case, with the address of the stream holding circuit controlled by the address control circuit, the transport stream output from the extracting circuit is written in the stream holding circuit, and the transport stream held in the stream holding circuit is read out. By the PID identifying circuit, the transport stream read out from the stream holding circuit is decoded to produce a PES packet or an elementary stream, so that the produced PES packet or elementary stream is stored in a storage region of the storing circuit provided for the channel specified on the basis of the PID information of the transport stream.

Thus, since the stream holding circuit is random accessible, the contents of a plurality of transport stream packets can be integrated into a continuous stream by using the stream holding circuit. Therefore, a higher processing speed can be achieved when the plurality of transport stream packets are processed by software, while a smaller circuit scale of hardware can be achieved when the plurality of transport stream packets are processed by hardware. Alternatively, both the higher software processing speed and the smaller hardware circuit scale can be achieved when the plurality of transport stream packets are processed by both software and hardware.

The stream holding circuit may include a first region that holds the transport stream output from the extracting circuit, and a second region that holds the PES packet or elementary stream produced by the PID identifying circuit. The PID identifying circuit may transfer the PES packet or elementary stream held in the second region of the stream holding circuit to the storage region of the storing circuit provided for the channel specified on the basis of the PID information of the transport stream.

In this case, the PES packet or elementary stream produced by the PID identifying circuit is temporarily held in the second region of the stream holding circuit and is then transferred to the storage region of the storing circuit provided for the channel specified on the basis of the PID information of the transport stream. This makes it possible to transfer successive data of the PES packet or elementary stream produced by the PID identifying circuit to the storage region in the storing circuit. This leads to an improved efficiency in the use of the storing circuit.

Further, since the first region that holds the transport stream output from the extracting circuit and the second region that holds the PES packet or elementary stream produced by the PID identifying circuit are both included in one stream holding circuit, the circuit scale becomes smaller.

### Brief Description of the Drawings

Fig. 1 is a block diagram showing the structure of a digital broadcasting receiver according to a first embodiment of the present invention.
Fig. 2 is a schematic diagram for use in explaining the operation of a transport decoder shown in Fig. 1.
Fig. 3 is a schematic block diagram for use in explaining the operation of an identifier selecting circuit in an AV decoder shown in Fig. 1.
Fig. 4 is a block diagram showing the structure of a digital broadcasting receiver according to a second embodiment of the present invention.
Fig. 5 is a block diagram showing the structure of a digital broadcasting receiver according to a third embodiment of the present invention.
Fig. 6 is a schematic diagram for use in explaining data structure of transport streams and PES packets.
Fig. 7 is a diagram showing a relationship between PES packets and elementary streams.
Fig. 8 is a block diagram showing the structure of a digital broadcasting receiver according to a fourth embodiment of the present invention.
Fig. 9 is a block diagram showing a memory, a PID identifying circuit and a bank memory in the digital broadcasting receiver of Fig. 8.
Fig. 10 is a schematic diagram for use in showing the structure of an input buffer of Fig. 9.
Fig. 11 is a diagram for use in explaining the effects of the input buffer of Fig. 10.
Fig. 12 is a diagram for use in explaining the effects of the input buffer of Fig. 10.

### Best Mode for Carrying out the Invention

Description will now be made on a digital broadcasting receiver as one example of a stream decoding apparatus in connection with the present invention. The stream decoding apparatus to which the present invention is applied is not particularly limited to this example, but the present invention is likewise applicable to any other stream decoding apparatuses that decode PES packets of a plurality of channels at one time.

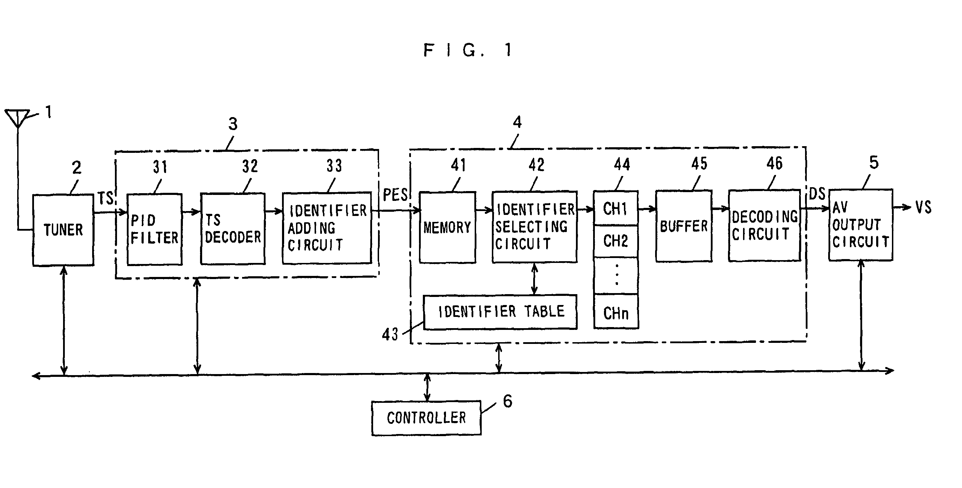

Fig. 1 is a block diagram showing the structure of a digital broadcasting receiver according to a first embodiment of the present invention.

The digital broadcasting receiver shown in Fig. 1 includes a tuner 2, a transport decoder 3, an AV (audio video) decoder 4, an AV output circuit 5 and a controller 6. The transport decoder 3 includes a PID filter 31, a TS (transport stream) decoder 32 and an identifier adding circuit 33. The AV decoder 4 includes a memory 41, an identifier selecting circuit 42, an identifier table 43, a bank memory 44, a buffer 45 and a decoding circuit 46.

The tuner 2 receives a BS-IF signal output from an antenna 1 composed of a parabola antenna or the like receiving BS (broadcasting satellite) radio waves through a digital broadcasting, for example, a BS digital broadcasting, to select a transmission channel instructed by the controller 6 from the BS-IF signal while performing a predetermined demodulation processing, and then the tuner 2 outputs, to the transport decoder 3, a transport stream TS having multiplexed video data and/or audio data of a plurality of channels.

The PID filter 31 in the transport decoder 3 extracts transport stream packets of the identical channel including PID information that matches PID information instructed by the controller 6 by reference to PID information included in a header of each packet of the transport stream TS, and then outputs the extracted transport stream packets to the TS decoder 32. The TS decoder 32 cuts off the header of each transport stream packet of the identical channel and connects the remaining payloads to one another, so as to produce a PES packet of the identical channel. The identifier adding circuit 33 adds to the produced PES packet an identifier being inherent identification information in the channel of that PES packet, and then outputs the resulting packet to the AV decoder 4.

The memory 41 in the AV decoder 4 temporarily stores the input PES packet and then outputs the stored PES packet to the identifier selecting circuit 42. The identifier selecting circuit 42 extracts the identifier, which has been added to the input PES packet, and then stores the PES packet in storage regions CH1 to CHn of the bank memory 44 which are provided for channels specified on the basis of PID information to which the extracted identifier corresponds, by reference to the identifier table 43. The identifier table 43 stores in a table format the identifier added by the identifier adding circuit 33 and the PID information corresponding to the added identifier.

The bank memory 44 has the plurality of storage regions CH1 to CHn one provided for each channel. The storage region CH1, for example, provided for a predetermined first channel, is a storage region that stores a PES packet made by decoding a transport stream packet with PID information of the first channel, i.e., the PES packet of the first channel.

The terms of the channels used in this description mean the channels as audiovisual units. For example, when one HD (high definition digital) broadcasting changes to three SD (standard digital television) broadcastings, one HD broadcasting before change is treated as one channel, while each of the subsequent three SD broadcastings is treated as one channel. That is, as to the channels used in this description, the number of channels increases as one HD broadcasting changes to three SD broadcastings.

The bank memory 44 outputs to the buffer 45 the PES packet that has been stored in any of the storage regions CH1 to CHn instructed by the controller 6. The buffer 45 temporarily stores the input PES packet therein and then outputs the same to the decoding circuit 46. The decoding circuit 46 decodes the input PES packet and then outputs a digital video signal and/or digital audio signal DS to the AV output circuit 5.

The AV output circuit 5 converts the applied digital video signal and/or digital audio signal DS into a system that can be displayed on a display device such as a television or the like, and then outputs the converted signal to the display device or the like. The controller 6 controls the operations of the tuner 2, transport decoder 3, AV decoder 4 and AV output circuit 5.

In this embodiment, the transport decoder 3 corresponds to first decoding means or a first decoding circuit, the AV decoder 4 to second decoding means or a second decoding circuit, the PID filter 31 to extracting means or an extracting circuit, the TS decoder 32 to transport stream decoding means or a transport stream decoding circuit, the identifier adding circuit 33 to adding means or an adding circuit, the bank memory 44 to storage means or a storing circuit, the identifier selecting circuit 42 and identifier table 43 to storage region specifying means or a storage region specifying circuit, and the decoding circuit 46 to video/audio decoding means or a video/audio decoding circuit.

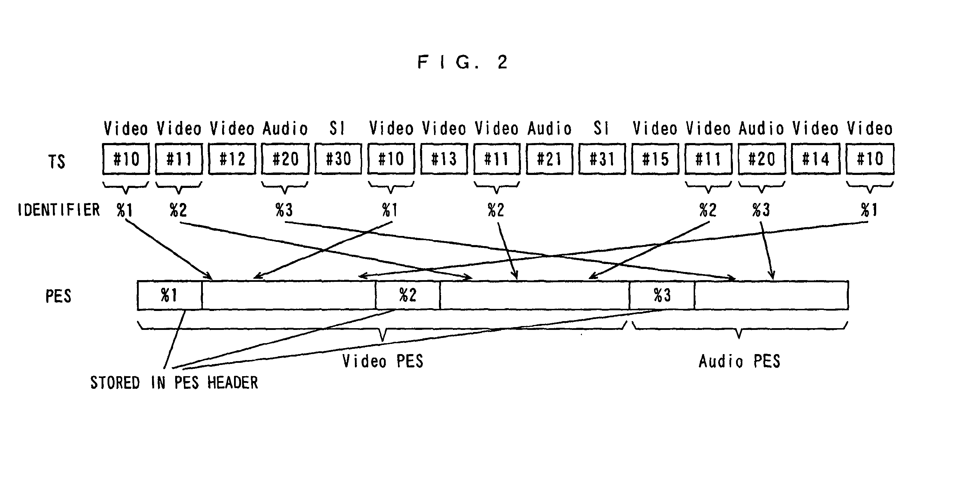

Description will now be made on the operation of the transport decoder 3 shown in Fig. 1. Fig. 2 is a schematic diagram for use in explaining the operation of the transport decoder 3 shown in Fig. 1.

With reference to Fig. 2, when the transport stream TS is input to the transport decoder 3, the PID filter 31 extracts transport stream packets whose PID information matches the PID information instructed by the controller 6 i.e., the transport stream packets of the identical channels, by reference to PID information included in the header of each transport stream packet, and then outputs the extracted packets to the TS decoder 32. In the example of Fig. 2, the respective transport stream packets with PID information being #10, #11 and #20 are extracted and then output to the TS decoder 32.

The TS decoder 32 cuts off the headers of the respective transport stream packets of the identical channel, connects their respective remaining payloads to one another and then outputs PES packets of the identical channels to the identifier adding circuit 33. The identifier adding circuit 33 adds a local identifier for specifying the channel of each PES packet to the header of each PES packet output from the TS decoder 32. The identifiers to be added are not particularly limited, but various identification information that can specify the channel of each PES packet may be used.

In the example shown in Fig. 2, an identifier %1 is added in case of the PID information #10; an identifier %2 is added in case of the PID information #11; and an identifier %3 is added in case of the PID information #20. Therefore, the identifier %1 is added to the header of a video PES packet that has been produced from the transport stream packet with the PID information #10; the identifier %2 is added to the header of a video PES packet that has been produced from the transport stream packet with the PID information #11; and the identifier %3 is stored in an audio PES packet that has been produced from the transport stream packet with the PID information #20.

Thus, the inherent identifier in each PES packet corresponding to the PID information is added to the header of each PES packet, and it becomes possible to identify, on the basis of the added identifier, which channel each PES packet belongs to.

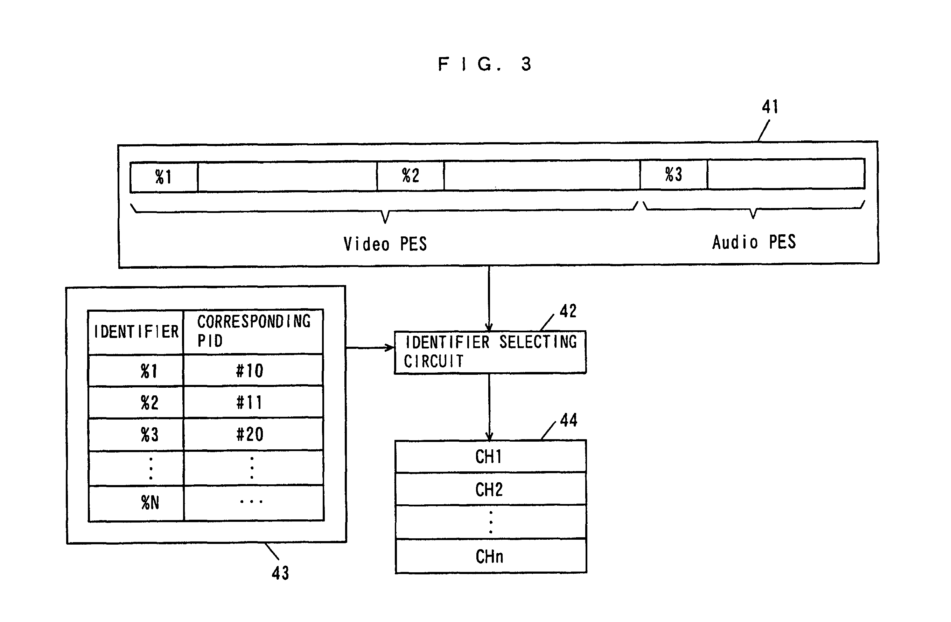

Detailed description will now be made on the operation of the identifier selecting circuit 42 in the AV decoder 4 shown in Fig. 1. Fig. 3 is a schematic block diagram for use in explaining the operation of the identifier selecting circuit 42 in the AV decoder 4 shown in Fig. 1.

As shown in Fig. 3, each PES packet with the identifier added by the identifier adding circuit 33 is stored in the memory 41 and is then output to the identifier selecting circuit 42. The identifier selecting circuit 42 refers to the identifier added to the input packet to read the PID information corresponding to that identifier from the identifier table 43. At this time, the controller 6 has instructed in advance the identifier selecting circuit 43 as to the storage regions CH1 to CHn in the bank memory 44, in which the PES packets with the identifiers corresponding to the read PID information are to be stored. Thus, the identifier selecting circuit 43 removes the identifiers from the PES packets read from the memory 41, and then stores the PES packets in the instructed storage regions CH1 to CHn.

In the example shown in Fig. 3, in case of the video PES packet with the added identifier %1, for example, the identifier selecting circuit 42 extracts the identifier %1 from the header of the PES packet to read the PID information #10 corresponding to the identifier %1 from the identifier table 43. At this time, the controller 6 instructs the PID information #10 to store the PES packet in the storage region CH1. After the video PES packet with the added identifier %1 has its identifier %1 removed, the PES packet is stored in the storage region CH1. Thus, the PES packets are stored for the respective channels in the respective storage regions CH1 to CHn in the bank memory 44.

The controller 6 instructs the bank memory 44 to output the PES packet of the channel that is to be decoded in the bank memory 44, via the buffer 45 to the decoding circuit 46. The bank memory 44 outputs the PES packet of the instructed channel to the decoding circuit 46 for each channel.

The decoding circuit 46 is capable of decoding data corresponding to one channel in the HD broadcasting at one time, for example, that is, the decoding circuit 46 can decode data corresponding to three channels in the SD broadcasting at one time. Therefore, when decoding the PES packets of three channels in the SD broadcasting, the bank memory 44 outputs the PES packets of the corresponding three channels from the storage regions CH1 to CHn via the buffer 45 to the decoding circuit 46. Then, the decoding circuit 46 decodes the PES packets of three channels at one time to output digital video signals and/or digital audio signals DS of three channels to the AV output circuit 5 in a predetermined order.

At this time, since the controller 6 recognizes which storage regions CH1 to CHn the decoded PES packets are read from, the controller 6 is capable of instructing the AV output circuit 5 as to which channels' PES packets are decoded and output. While specifying which channels' digital video signals and/or digital audio signals DS are the input digital video signals DS, the AV output circuit 5 converts the digital video signals DS of three channels into a system that can be displayed on a display device and outputs the converted signals to the display device, whereby videos of three channels can be displayed at one time.

As described above, in this. embodiment, the PES packets are stored in the storage regions CH1 to CHn corresponding to the channels specified on the basis of the identifiers added to the PES packets, and the PES packets are stored in the storage regions CH1 to CHn that are different for the respective channels. Therefore, by specifying which storage regions CH1 to CHn the decoded PES packets are read from, it is made possible to specify which channels' PES packets the concerned PES packets are. This makes it possible to decode the PES packets of a plurality of channels at one time while recognizing which channels' PES packets are the decoded PES packets.

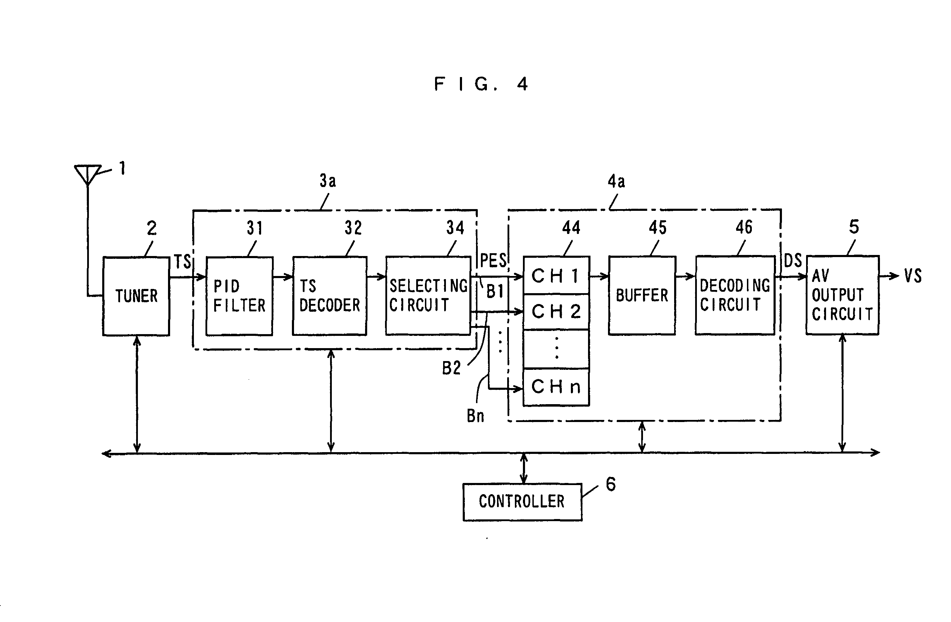

Description will now be made on a digital broadcasting receiver according to a second embodiment of the present invention. Fig. 4 is a block diagram showing the structure of the digital broadcasting receiver according to the second embodiment of the present invention.

The digital broadcasting receiver of Fig. 4 differs from that of Fig. 1 in that the transport decoder 3 is substituted by a transport decoder 3a including a PID filter 31, a TS decoder 32 and a selecting circuit 34, the AV decoder 4 is substituted by an AV decoder 4a including a bank memory 44, a buffer 45 and a decoding circuit 46, and the transport decoder 3a and AV decoder 4a are connected to each other through a plurality of transmission paths B1 to Bn provided for respective channels . With respect to the other parts of the digital broadcasting receiver in Fig. 4, they are similar to those in Fig, 1, and hence, detailed description will not be repeated with the identical parts being denoted with the identical signs.

The PID filter 31 and TS decoder 32 in the transport decoder 3a shown in Fig. 4 perform the same operation as the PID filter 31 and TS decoder 32 shown in Fig. 1, in which operation, PES packets of the identical channels are produced and output from the TS decoder 32 to the selecting circuit 34. The selecting circuit 34 is instructed by the controller 6 as to which channels' PES packets the presently produced PES packets are, so as to select any of the transmission paths B1 to Bn connected to the storage regions CH1 to CHn in the bank memory 44 in correspondence with the concerned channels and then store the PES packets in the corresponding storage regions in the bank memory 44 through the selected transmission paths. The bank memory 44, buffer 45 and decoding circuit 46 hereinafter perform similarly to those in the first embodiment by control by the controller 6.

In this embodiment, the transmission paths B1 to Bn correspond to a transmission path, the transport decoder 3a to first decoding means or a first decoding circuit, the AV decoder 4a to second decoding means or a second decoding circuit, the PID filter 31 to extracting means or an extracting circuit, the TS decoder 32 to transport stream decoding means or a transport stream decoding circuit, the selecting circuit 34 to selecting means or a selecting circuit, the bank memory 44 to storage means or a storing circuit, and the decoding circuit 46 to video/audio decoding means or a video/audio decoding circuit.

As described above, in this embodiment, the PES packets output from the TS decoder 32 by the selecting circuit 34 are stored in the respective storage regions CH1 to CHn corresponding to the respective channels of the PES packets via the respective transmission paths B1 to Bn provided for the respective channels of the PES packets, so that the PES packets are stored in the storage regions CH1 to CHn that are different for the respective channels. Therefore, by specifying which storage regions CH1 to CHn the PES packets being decoded are read from, it is made possible to specify which channels' PES packets the concerned PES packets are. This makes it possible to decode the PES packets of a plurality of channels at one time while recognizing which channels' PES packets the PES packets being decoded are.

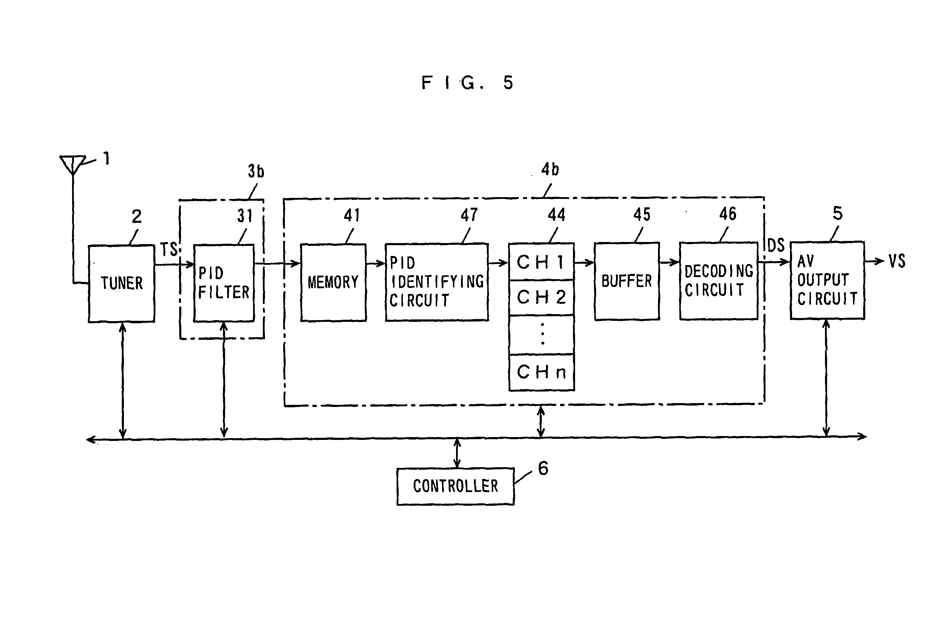

Description will now be made on a digital broadcasting receiver according to a third embodiment of the present invention. Fig. 5 is a block diagram showing the structure of the digital broadcasting receiver according to the third embodiment of the present invention.

The digital broadcasting receiver of Fig. 5 differs from that of Fig. 1 in that the transport decoder 3 is substituted by a transport decoder 3b including a PID filter 31, and the AV decoder 4 is substituted by an AV decoder 4b including a memory 41, a PID identifying circuit 47, a bank memory 44, a buffer 45 and a decoding circuit 46. Since the remaining parts in Fig. 5 are similar to those in the digital broadcasting receiver of Fig. 1, the detailed description thereof will not be repeated with the identical parts being denoted with the identical signs.

The PID filter 31 in the transport decoder 3b shown in Fig. 5 performs the same operation as the PID filter 31 shown in Fig. 1, in which operation, by reference to PID information included in the header of each packet in a transport stream TS output from the tuner 2, the PID filter 31 extracts transport stream packets of the identical channels including PID information that matches PID information instructed by the controller 6 and then outputs the extracted packets to the memory 41.

The memory 41 in the AV decoder 4 temporarily stores the input transport stream therein and then outputs the stored transport stream to the PID identifying circuit 47. Like the PID filter 31, the PID identifying circuit 47 receives from the controller 6 the PID information of the transport stream output from the PID filter 31, then decodes the input transport. stream and converts the decoded transport stream into PES packets. The PID identifying circuit 47 subsequently stores the PES packets in the storage regions CH1 to CHn of the bank memory 44, which are provided for the channels corresponding to the PID information instructed by the controller 6. The bank memory 44, buffer 45 and decoding circuit 46 hereinafter perform similarly to those in the first embodiment by control by the controller 6.

In case where the decoding circuit 46 can output digital video signals and/or digital audio signals DS by decoding a transport stream to produce PES packets and further decoding the produced PES packets, the transport stream may be stored in each of the storage regions CH1 to CHn in the bank memory 44 for each channel, without the transport stream being converted into PES packets by the PID identifying circuit 47. Alternatively, if the PID identifying circuit 47 can perform completely the same operation as the PID filter 31, the transport decoder 3b may be omitted.

In this embodiment, the bank memory 44 corresponds to storing means or a storing circuit, the PID identifying circuit to storage region specifying means or a storage region specifying circuit, the decoding circuit 46 to video/audio decoding means or a video/audio decoding circuit, and the PID filter 31 to extracting means or an extracting circuit.

As described above, in this embodiment, the PES packets that are produced by decoding the transport stream are stored by the PID identifying circuit 47, in the storage regions CH1 to CHn provided for the channels specified on the basis of the PID information of the transport stream, so that the PES packets are stored in the storage regions CH1 to CHn which are different for the respective channels. Therefore, it is made possible to specify which channels' PES packets the PES packets being decoded are, by specifying which storage regions CH1 to CHn the PES packets being decoded are read from. This makes it possible to decode the PES packets of a plurality of channels at one time while recognizing which channels' PES packets the PES packets being decoded are.

Furthermore, in this embodiment, since the PES packets are stored in the storage regions CH1 to CHn provided for the channels corresponding to the PID information of the transport stream which are referred to by the PID identifying circuit 47, the PES packets of the identical channels can be stored constantly in the respective storage regions CH1 to CHn. Even if transport stream packets are not correctly transmitted due to some broadcast accidents or the like, a switching between programs can be made in a seamless state.

For example, when the transport stream of PID information #B is transmitted subsequently to the transport stream of PID information #A, even if the last transport stream packet of the transport stream of the PID information #A is replaced by the first transport stream packet of the transport stream of the PID information #B, those transport stream packets can be stored in the respective storage regions CH1 to CHn with their replaced parts corrected to be placed in the original positions since the transport stream packets are extracted on the basis of the PID information, resulting in a seamless switching between programs.

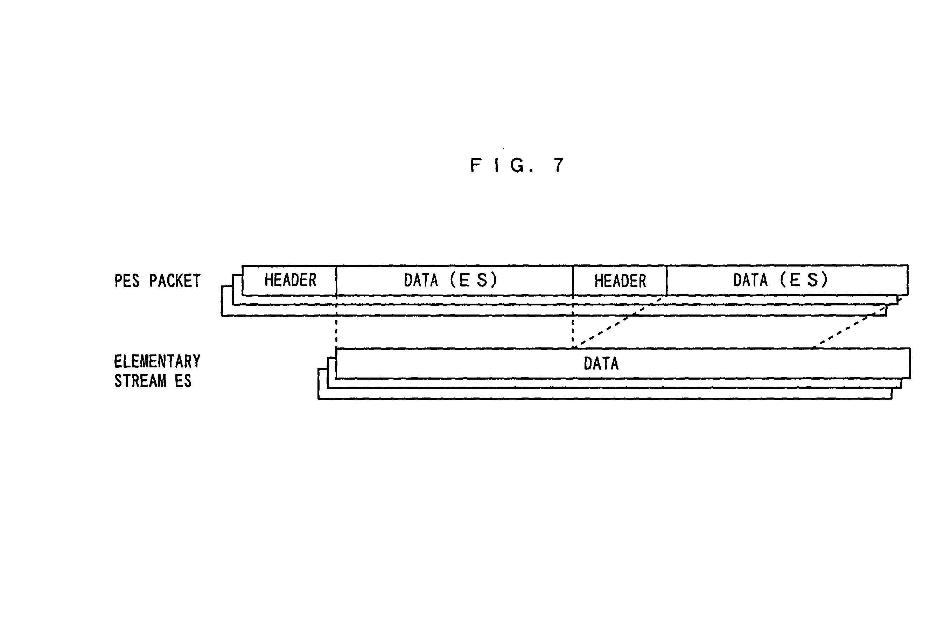

The stream decoding apparatus in accordance with the present invention is applicable to not only PES packets but also elementary streams ES as will now be described. Fig. 7 shows a relationship between PES packets and elementary streams.

With reference to Fig. 7, data of an elementary stream ES is divided into a plurality of parts, and a header is added to data of each divided part, whereby PES packets are produced. In decoding, the PES packets have their headers removed and their data connected to one another, thereby producing the elementary streams ES.

In the digital broadcasting receiver of Fig. 1, the elementary streams ES may be produced by, after the TS decoder 32 cuts off the headers of the transport stream packets of the identical channels and connects the remaining payloads to one another to produce the PES packets of the identical channels, then cutting off the headers of the PES packets and connecting the data to one another.

In this case, the identifier adding circuit 33 adds, to the produced elementary streams ES, identifiers to be inherent identification information in the channels of the elementary streams and then outputs the resulting elementary streams ES to the AV decoder 4.

The memory 41 in the AV decoder 4 temporarily stores the input elementary streams ES therein and then outputs the stored elementary streams ES to the identifier selecting circuit 42. The identifier selecting circuit 42 extracts the identifiers added to the input elementary streams ES, and then stores the elementary streams ES in the storage regions CH1 to CHn of the bank memory 44 provided for the channels which are specified on the basis of the PID information corresponding to the identifiers extracted by reference to the identifier table 43.

The bank memory 44 outputs to the buffer 45 the elementary streams ES stored in those of the storage regions CH1 to CHn, which are instructed by the controller 6. The buffer 45 temporarily stores the input elementary streams ES therein and outputs the stored elementary streams ES to the decoding circuit 46. The decoding circuit 46 decodes the input elementary streams ES and outputs a digital video signal and/or digital audio signal DS to the AV output circuit 5.

Alternatively, in the digital broadcasting receiver of Fig. 1, the identifier selecting circuit 42 may produce elementary streams ES from the PES packets while extracting the identifiers added to the input PES packets, and then may store the elementary streams ES in the storage regions CH1 to CHn of the bank memory 44 provided for the channels that are specified on the basis of the PID information corresponding to the identifiers extracted by reference to the identifier table 43.

In this case, the bank memory 44 outputs to the buffer 45 the elementary streams ES stored in those of the storage regions CH1 to CHn, which are instructed by the controller 6. The buffer 45 temporarily stores the input elementary streams ES therein and outputs the stored elementary streams ES to the decoding circuit 46. The decoding circuit 46 decodes the input elementary streams ES and then outputs a digital video signal and/or digital audio signal DS to the AV output circuit 5.

Furthermore, in the digital broadcasting receiver of Fig. 4, elementary streams ES may be produced by, after the TS decoder 32 cuts off the headers of transport stream packets of the identical channels and connects the remaining payloads to one another, to produce the PES packets of the identical channels, then cutting off the headers of the produced PES packets and then connecting data to one another.

In this case, the selecting circuit 34 is instructed by the controller 6 as to which channels' elementary streams ES the elementary streams ES being currently produced are, so that the selecting circuit 34 selects those of the transmission paths B1 to Bn connected to those of the storage regions CH1 to CHn in the bank memory 44, which correspond to the concerned channels, and then stores the elementary streams ES in the corresponding storage regions in the bank memory 44 via the selected transmission paths. The bank memory 44, buffer 45 and decoding circuit 46 operate hereafter similarly to those in the digital broadcasting receiver of Fig. 1 by control by the controller 6.

Moreover, in the digital broadcasting receiver of Fig. 5, after the PID identifying circuit 47 receives from the controller 6 the PID information of transport streams output from the PID filter 31, then decodes the input transport streams and converts the decoded transport streams into PES packets, to produce elementary streams ES from the PES packets, the elementary streams ES may be stored in the storage regions CH1 to CHn in-the bank memory 44, which are provided for the channels corresponding to the PID information instructed by the controller 6. The bank memory 44, buffer 45 and decoding circuit 46 operate hereafter similarly to those in the digital broadcasting receiver of Fig. 1 by control by the controller 6.

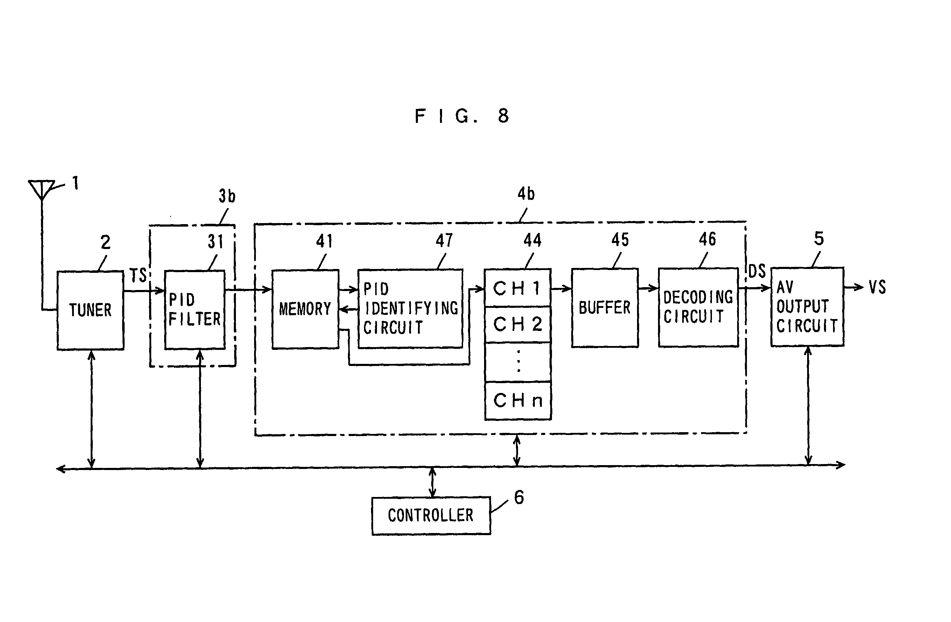

Description will now be made on an example of the structure of the digital broadcasting receiver in this case. Fig. 8 is a block diagram showing the structure of a digital broadcasting receiver according to a fourth embodiment of the present invention.

The digital broadcasting receiver of Fig. 8 differs from that of Fig. 5 mainly in that the structure and operation of a memory 41 and a PID identifying circuit 47.

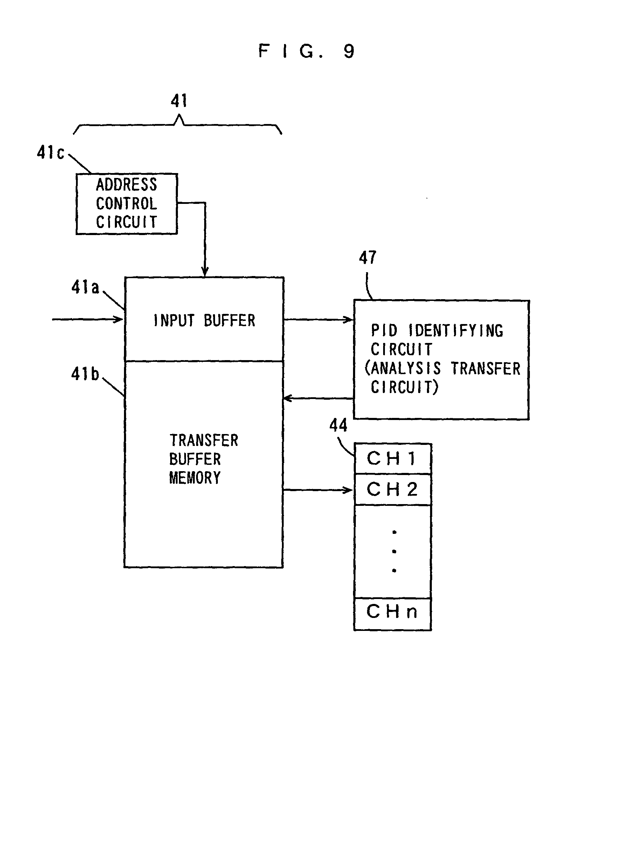

Fig. 9 is a block diagram showing the memory 41, PID identifying circuit (an analysis transfer circuit) 47 and the bank memory 44.

With reference to Fig. 9, the memory 41 includes an input buffer 41a, a transfer buffer memory 41b and an address control circuit 41c. The input buffer 41a and transfer buffer memory 41b are each constituted by a readable and writable random access memory. Alternatively, the random access memory may be substituted by other random accessible storage circuits.

By reference to PID information included in the header of each packet of a transport stream TS output from the tuner 2, the PID filter 31 in the transport decoder 3b of Fig. 8 extracts transport stream packets of the identical channels including the PID information that matches PID information instructed by the controller 6, and then outputs the extracted packets to the input buffer 41a.

The address control circuit 41c writes the transport stream packets output from the PID filter 31 into a predetermined address in the input buffer 41a. Further, the address control circuit 41c reads at a predetermined timing the transport stream packets stored in the input buffer 41a and then outputs the read packets to the PID identifying circuit 47.

The PID identifying circuit 47 receives from the controller 6 the PID information of the transport stream output from the input buffer 41a, decodes the input transport stream, converts the decoded transport stream into PES packets and produces elementary streams ES from the PES packets. After that, the PID identifying circuit 47 stores the elementary streams ES via the transfer buffer memory 41b into the storage regions CH1 to CHn in the bank memory 44, which are provided for the channels corresponding to the PID information instructed by the controller 6.

In this example, since the input buffer 41a and transfer buffer memory 41b are each constituted by a single memory, a smaller circuit scale is achieved.

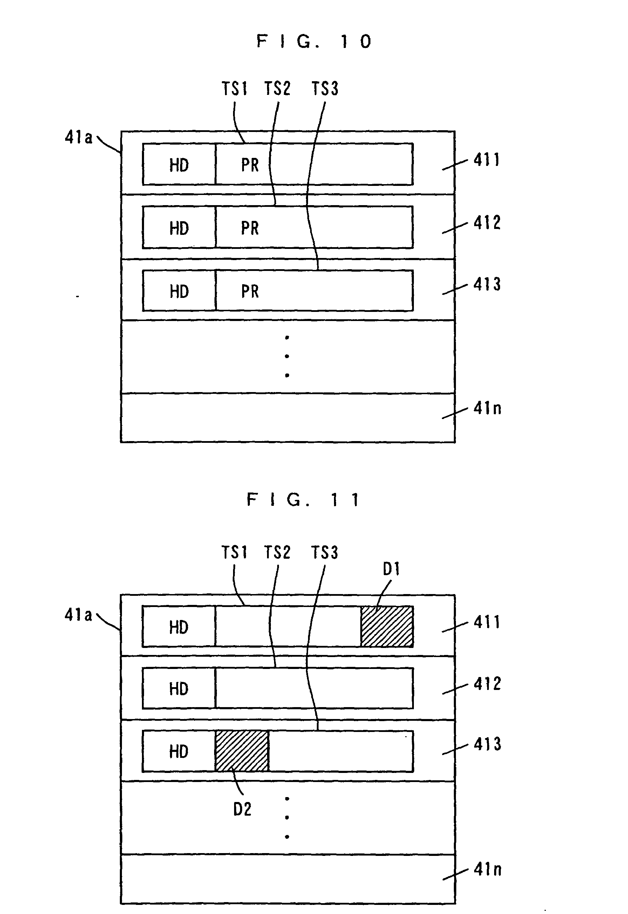

Fig. 10 is a schematic diagram for use in explaining the structure of the input buffer of Fig. 9. As shown in Fig. 6, each transport stream packet has a fixed length of, for example, 188 bytes. In correspondence to this, the input buffer 41a includes a plurality of storage regions 411 to 41n that can store the respective transport stream packets each having the fixed length. For example, transport stream packets TS1 to TS3 constituted by headers HD and payloads PR are written in turn in the storage regions 411 to 413 of the input buffer 41a by the address control circuit 41c of Fig. 9.

In this case, since the headers HD of the respective transport stream packets TS1 to TS3 are stored in specific positions of the respective storage regions 411 to 413, the PID identifying circuit 47 can easily detect the headers HD of the respective transport stream packets TS1 to TS3 by using the address control circuit 41c.

Therefore, the processing speed becomes increased in case where the PID identifying circuit 47 is constituted by software, while the circuit scale becomes decreased in case where the PID identifying circuit 47 is constituted by hardware. If the PID identifying circuit 47 is constituted by software and hardware, the processing speed of software becomes increased, and the circuit scale of hardware becomes decreased.

The input buffer 41a constituted by a readable and writable random memory results in such effects as described below.

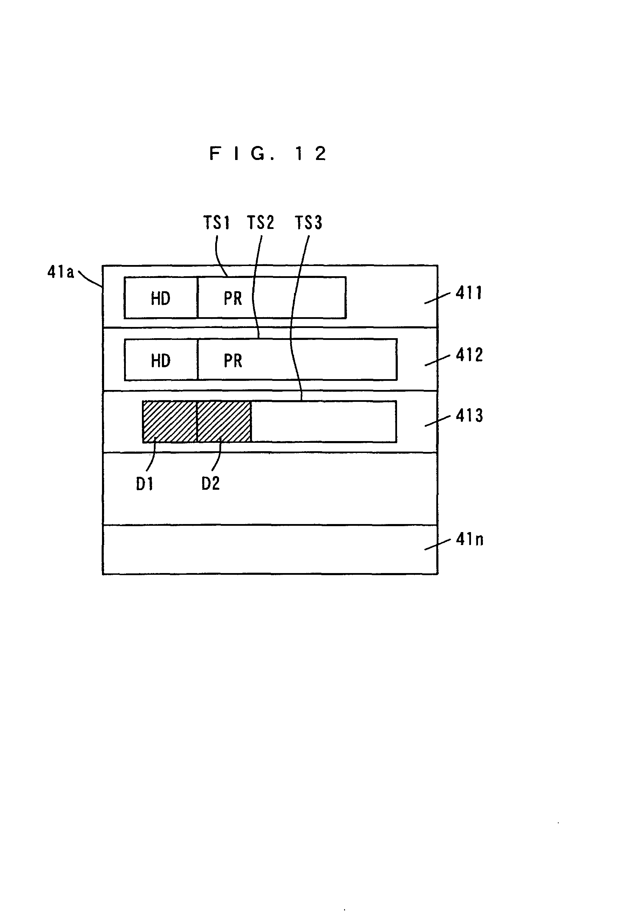

In production of transport stream packets, it happens that the contents of the header structure or the like of PES packets are divided into two transport stream packets. As shown in Fig. 11, for example, it is assumed that transport stream packets TS1 and TS3 belong to an identical channel, while a transport stream packet TS2 belongs to another channel. Further, it is assumed that the contents D1 of a part included in the last portion of the transport stream packet TS1 are continuously followed by the contents D2 of a part included in the leading portion of the transport stream packet TS3 on PES packets or elementary streams. In such a case, as shown in Fig. 12, the address control circuit 41c reads the contents D1 included in the last portion of the transport stream packet TS1 stored in the storage region 411, and then writes the read contents D1 into a preceding region which is followed by the contents D2 included in the leading portion of the transport stream packet TS3 stored in the storage region 413. In this case, since the header HD of the transport stream packet TS3 stored in the storage region 413 is no longer necessary, the contents D1 may be overwritten on the header HD.

Thus, it becomes possible to integrate the contents D1 and D2 of the transport stream packets TS1 and TS3 into a continuous stream by using the input buffer 41a. Therefore, when the transport stream packets TS1 and TS3 are processed by software, the processing speed can be increased, while when the transport stream packets TS1 and TS3 are processed by hardware, the circuit scale of hardware can be decreased. Alternatively, when the transport stream packets TS1 and TS2 are processed by software and hardware, it is possible to increase the processing speed of software and also decrease the circuit scale of hardware.

The structures of Figs. 9 and 10 are also applicable to the TS decoder 32 in each of the digital broadcasting receivers of Figs. 1 and 4.

In accordance with the present invention, on the basis of identification information added to PES packets or elementary streams, or storage regions in which the PES packets or elementary streams and the like are stored, it is possible to specify which channels' PES packets or elementary streams the PES packets or elementary streams being decoded are, and decode PES packets or elementary streams of a plurality of channels at one time while recognizing which channels' PES packets or elementary streams the PES packets or elementary streams being decoded are.

## Claims

1. A stream decoding apparatus, comprising:
first decoding means that decodes a transport stream in which video data and/or audio data of a plurality of channels are multiplexed, to produce a PES packet or an elementary stream for each channel, and then adds inherent identification information in each channel to the produced PES packet or elementary stream and then outputs the resultant PES packet or elementary stream; and
second decoding means that decodes for each channel the PES packet or elementary stream output from said first decoding means by using the identification information added to the PES packet or elementary stream.

2. The stream decoding apparatus according to claim 1, wherein said first decoding means includes
extracting means that extracts a transport stream packet of an identical channel from a transport stream by reference to PID information of the transport stream,
transport stream decoding means that decodes the transport stream packet extracted by said extracting means to produce a PES packet or an elementary stream for each channel, and
adding means that adds inherent identification information in each channel to the PES packet or elementary stream output from said transport stream decoding means and then outputs the resultant PES packet or elementary stream.

3. The stream decoding apparatus according to claim 2, wherein said second decoding means includes
storing means having a plurality of storage regions provided for respective channels,
storage region specifying means that stores the PES packet or elementary stream output from said adding means into a storage region of said storing means provided for a channel specified on the basis of the identification information added to the PES packet or elementary stream, and
video/audio decoding means that decodes for each storage region the PES packet or elementary stream stored in said storing means.

4. A stream decoding apparatus, comprising:.
a plurality of transmission paths provided for respective channels;
first decoding means that decodes a transport stream in which video data and/or audio data of a plurality of channels are multiplexed, to produce a PES packet or an elementary stream for each channel, and then outputs the produced PES packet or elementary stream to a transmission path of said plurality of transmission paths provided for a channel of the PES packet or elementary stream, and
second decoding means that decodes the PES packets or elementary streams transmitted through said plurality of transmission paths.

5. The stream decoding apparatus according to claim 4, wherein said first decoding means includes
extracting means that extracts a transport stream packet of an identical channel from a transport stream by reference to PID information of the transport stream,
transport stream decoding means that decodes the transport stream packet extracted by said extracting means to produce a PES packet or an elementary stream for each channel, and
selecting means that selects a transmission path of said plurality of transmission paths, which is provided for a channel of the PES packet or elementary stream produced by said transport stream decoding means, and then outputs the PES packet or elementary stream to the selected transmission path.

6. The stream decoding apparatus according to claim 5, wherein said second decoding means includes
storing means having a plurality of storage regions provided respectively for said plurality of transmission paths and storing in the respective storage regions for the respective channels the PES packets or elementary streams transmitted through said plurality of transmission paths, and
video/audio decoding means that decodes for each storage region the PES packet or elementary stream stored in said storing means.

7. A stream decoding apparatus, comprising:
storing means having a plurality of storage regions provided for respective channels;
storage region specifying means that stores a transport stream, a PES packet or an elementary stream of an identical channel produced from a transport stream in which video data and/or audio data of a plurality of channels are multiplexed, into a storage region of said storing means provided for the identical channel; and
video/audio decoding means that decodes for each storage region the transport stream, PES packet or elementary stream stored in said storing means.

8. The stream decoding apparatus according to claim 7, further comprising extracting means that extracts a transport stream packet of an identical channel by reference to PID information of a transport stream in which video data and/or audio data of a plurality of channels are multiplexed, and then outputs a transport stream of the identical channel, wherein
said storage region specifying means stores the transport stream output from said extracting means into a storage region of said storing means provided for a channel specified on the basis of the PID information of the transport stream, and
said video/audio decoding means decodes for each storage region the transport stream stored in said storing means.

9. The stream decoding apparatus according to claim 7, further comprising extracting means that extracts a transport stream packet of an identical channel by reference to PID information of a transport stream in which video data and/or audio data of a plurality of channels are multiplexed, and then outputs a transport stream of the identical channel, wherein
said storage region specifying means stores a PES packet or an elementary stream made by decoding the transport stream output from said extracting means, into a storage region of said storing means provided for a channel specified on the basis of the PID information of the transport stream, and
said video/audio decoding means decodes for each storage region the PES packet or elementary stream stored in said storing means.

10. The stream decoding apparatus according to claim 9, wherein said storage region specifying means includes
random accessible stream holding means for holding a transport stream,
address control means that controls an address of said stream holding means in order to write the transport stream output from said extracting means into said stream holding means and read the transport stream held in said stream holding means, and
PID identifying means that decodes the transport stream read out from said stream holding means to produce a PES packet or an elementary stream, and then stores the produced PES packet or elementary stream into a storage region of said storing means provided for a channel specified on the basis of PID information of said transport stream.

11. The stream decoding apparatus according to claim 10, wherein said stream holding means includes
a first region that holds the transport stream output from said extracting means, and
a second region that holds the PES packet or elementary stream produced by said PID identifying means, wherein
said PID identifying means transfers the PES packet or elementary stream held in said second region of said stream holding means to the storage region of said storing means provided for the channel specified on the basis of the PID information of said transport stream.

12. A stream decoding apparatus, comprising:
a first decoding circuit that decodes a transport stream in which video data and/or audio data of a plurality of channels are multiplexed, to produce a PES packet or an elementary stream for each channel, and then adds inherent identification information in each channel to the produced PES packet or elementary stream and outputs the resultant PES packet or elementary stream; and
a second decoding circuit that decodes for each channel the PES packet or elementary stream output from said first decoding means by using the identification information added to the PES packet or elementary stream.

13. The stream decoding apparatus according to claim 12, wherein said first decoding circuit includes
an extracting circuit that extracts a transport stream packet of an identical channel from a transport stream by reference to PID information of the transport stream,
a transport stream decoding circuit that decodes the transport stream packet extracted by said extracting circuit to produce a PES packet or an elementary stream for each channel, and
an adding circuit that adds inherent identification information in each channel to the PES packet or elementary stream output from said transport stream decoding circuit and then outputs the resultant PES packet or elementary stream.

14. The stream decoding apparatus according to claim 13, wherein said second decoding circuit includes
a storing circuit having a plurality of storage regions provided for respective channels,
a storage region specifying circuit that stores the PES packet or elementary stream output from said adding circuit into a storage region of said storing circuit provided for a channel specified on the basis of the identification information added to the PES packet or elementary stream, and
a video/audio decoding circuit that decodes for each storage region the PES packet or elementary stream stored in said storing circuit.

15. A stream decoding apparatus, comprising:
a plurality of transmission paths provided for respective channels;
a first decoding circuit that decodes a transport stream in which video data and/or audio data of a plurality of channels are multiplexed, to produce a PES packet or an elementary stream for each channel, and then outputs the produced PES packet or elementary stream to a transmission path of said plurality of transmission paths provided for a channel of the PES packet or elementary stream; and
a second decoding circuit that decodes PES packets or elementary streams transmitted through said plurality of transmission paths.

16. The stream decoding apparatus according to claim 15, wherein said first decoding circuit includes
an extracting circuit that extracts a transport stream packet of an identical channel from a transport stream by reference to PID information of the transport stream,
a transport stream decoding circuit that decodes the transport stream packet extracted by said extracting circuit to produce a PES packet or an elementary stream for each channel, and
a selecting circuit that selects a transmission path of said plurality of transmission paths, which is provided for a channel of the PES packet or elementary stream produced by said transport stream decoding circuit, and then outputs the PES packet or elementary stream to the selected transmission path.

17. The stream decoding apparatus according to claim 16, wherein said second decoding circuit includes
a storing circuit having a plurality of storage regions provided respectively for said plurality of transmission paths and storing in the respective storage regions for the respective channels the PES packets or elementary streams transmitted through said plurality of transmission paths, and
a video/audio decoding circuit that decodes for each storage region the PES packet or elementary stream stored in said storing circuit.

18. A stream decoding apparatus, comprising:
a storing circuit having a plurality of storage regions provided for respective channels;
a storage region specifying circuit that stores a transport stream, a PES packet or an elementary stream of an identical channel produced from a transport stream in which video data and/or audio data of a plurality of channels are multiplexed, into a storage region of said storing circuit provided for the identical channel; and
a video/audio decoding circuit that decodes for each storage region the transport stream, PES packet or elementary stream stored in said storing circuit.

19. The stream decoding apparatus according to claim 18, further comprising an extracting circuit that extracts a transport stream packet of an identical channel by reference to PID information of a transport stream in which video data and/or audio data of a plurality of channels are multiplexed, and then outputs a transport stream of the identical channel, wherein
said storage region specifying circuit stores the transport stream output from said extracting circuit into a storage region of said storing circuit provided for a channel specified on the basis of the PID information of the transport stream, and
said video/audio decoding circuit decodes for each storage region the transport stream stored in said storing circuit.

20. The stream decoding apparatus according to claim 18, further comprising an extracting circuit that extracts a transport stream packet of an identical channel by reference to PID information of a transport stream in which video data and/or audio data of a plurality of channels are multiplexed, and then outputs a transport stream of the identical channel, wherein
said storage region specifying circuit stores a PES packet or an elementary stream made by decoding the transport stream output from said extracting circuit, into a storage region of said storing circuit provided for a channel specified on the basis of the PID information of the transport stream, and
said video/audio decoding circuit decodes for each storage region the PES packet or elementary stream stored in said storing circuit.

21. The stream decoding apparatus according to claim 20, wherein said storage region specifying circuit includes
a random accessible stream holding circuit for holding a transport stream,
an address control circuit that controls an address of said stream holding circuit in order to write the transport stream output from said extracting circuit into said stream holding circuit and read the transport stream held in said stream holding circuit, and
a PID identifying circuit that decodes the transport stream read out from said stream holding circuit to produce a PES packet or an elementary stream, and then stores the produced PES packet or elementary stream into a storage region of said storing circuit provided for a channel specified on the basis of PID information of said transport stream.

22. The stream decoding apparatus according to claim 21, wherein said stream holding circuit includes
a first region that holds the transport stream output from said extracting circuit, and
a second region that holds the PES packet or elementary stream produced by said PID identifying circuit, wherein
said PID identifying circuit transfers the PES packet or elementary stream held in said second region of said stream holding circuit to the storage region of said storing circuit provided for the channel specified on the basis of the PID information of said transport stream.
